# EUROPEAN PATENT APPLICATION

(11) **EP 1 043 671 A2**
(43) Date of publication of application: **11.10.2000**
(21) Application number: 00302178.9
(22) Date of filing: 17.03.2000
(51) Int. Cl.: G06F 17/60

(54) **Message broker providing a publish/subscribe service and method of processing messages in a publish/subscribe environment**

(30) Priority: 19.03.1999 GB 9906231; 04.06.1999 GB 9912901
(71) Applicant: International Business Machines Corporation, Armonk, NY 10504 (US)
(72) Inventor: Bird, Colin Leonard, Winchester, Hampshire SO21 2JN (GB); Ibbotson, John Brian, IBM UK Ltd., IPL, Winchester, Hampshire SO21 2JN (GB)
(74) Representative: Jennings, Michael John

(57) **Abstract**

Provided is a message broker and a method of processing message content within a publish/subscribe message distribution service. The message broker and method extends publish/subscribe service capability to heterogeneous communications networks in which different subscriber systems can have very different capabilities in terms of their multimedia presentation capabilities, processing capabilities and storage capabilities. The broker modifies the content of messages received from publisher application programs to conform to the subscriber system capabilities prior to distribution to subscriber applications. The broker is adapted to identify characteristics of the content of received messages and to use this information to determine which of a set of message handler modules to pass the message to. Derived messages are generated by the selected message handler module and sent to subscribers for which this message type or message content has been requested. A multimedia processing module is preferably selected in response to identification of certain multimedia content.

## Description

### Field of Invention

The present invention relates to a message broker providing a publish/subscribe service, and to a method of processing message content in a publish/subscribe environment.

### Background

Publish/subscribe is a known information distribution mechanism in which information providers (Publishers) send information electronically across a network to a community of information users (Subscribers) who have chosen the topics of information they wish to receive. Typically, publishers publish a single message to a broker. The broker then decides from its registered subscriptions where to send copies or derivatives of the message.

Known publish/subscribe mechanisms rely on distribution lists, typically executing very simple logic to achieve required routing of highly structured, small transactional messages. Subscriber applications can be registered to receive all messages which include a specific subject classification or keyword, such as a company name or a more specific subject, within the message header or within a particular content field of the structured message. Message dictionaries hold information about the structure of messages, providing the message broker with a definition of the structure of all messages that will pass through it and so enabling unpacking of fields from the message content for inspection. The message broker queries the message header or a field within the content to retrieve the subject classification or keyword, and this is then compared with a list of subscriber applications' information requirements and any other stored rules for routing messages to determine which applications the message should be sent to.

Knowledge of the registered applications' required message formats also enables message format transformations (for example, an incoming message's text content may be in COBOL whereas a subscriber may require this content to be converted to text within an e-mail memo). An example apparatus and method providing this capability is described in US patent 5,187,787.

These known publish/subscribe mechanisms can only operate with highly structured messages, since the simple logic involves comparison of the contents of only a specific message field with entries in a distribution list. Furthermore, known publish/subscribe mechanisms have typically only used simple logic for routing determination and format transformations and have not extended the publish/subscribe environment to more complex processing of message content which is not text-based. Since modern communications increasingly include non-text based messages, such as the sending of graphics and video over the Internet, these limitations of the prior art systems are a significant problem.

Furthermore, the typical network environments in which publish/subscribe mechanisms have been implemented include high performance workstations as subscriber computer systems with the broker running on a server computer to which each of the subscriber systems connects. The subscriber systems are thus typically homogeneous in terms of their system capabilities. The individual information requirements of users at each of the workstations have typically also been broadly consistent, since the broker's server system and the subscriber systems have typically been implemented within a single organisation for managing distribution of data to subscribers within the organisation. It is very common for modern communications and data processing networks to comprise heterogeneous networks in which different systems have very different capabilities. Known publish/subscribe services do not take account of these differences.

### Summary of Invention

In a first aspect of the present invention, there is provided a message broker software component supporting a publish/subscribe service wherein the broker is adapted to receive and store information from subscriber systems regarding their capabilities, and wherein the broker is responsive to receipt of a message from publisher application programs to modify the content of the message to conform to the subscriber system capabilities and then to send derived messages including the modified message content to subscriber application programs at the subscriber systems.

Subscriber "systems" in this context may be any network-connected data processing or data presentation apparatus or device, such as a computer system, a personal digital assistant (PDA), a device controller embedded within an apparatus (such as in a vehicle), a mobile telephone or message service centre, or a 'set-top box' connected to a television set.

The subscriber systems' capabilities are preferably characteristics which are relevant either to the presentation of message content at the subscriber system or to the processing or storing of the message content at the subscriber system. Examples of the capabilities of the subscriber system to process and to store message content include the processor speed and available storage space. Examples of capabilities relevant to presentation include:
∘ graphics capabilities such as the resolution or pixel depth of the display apparatus of the subscriber system, the graphics mode (type of display), the compression schemes supported, preferred image format and other image model parameters;
∘ system limitations relevant to text documents such as a maximum document buffer size;
∘ audio capabilities, including whether the subscriber system supports audio playback and if so which formats;
∘ video capabilities, including whether the subscriber system supports video playback and which formats;
∘ characteristics which have requirements for business information (i.e. content-specific requirements as distinct from the more generic system limitations relevant to text documents described above) - these requirements may be data type conversions (such as text to voice for a mobile telephone); and
∘ the application programs which are available on the system.

Exposing these system characteristics or capabilities to the broker enables the broker to modify message content to conform to the capabilities. For example, a computer system within a vehicle may require transcoding of the text of received messages into audio, and may be unable to play video files, and the display screen may be low resolution. As another example, algorithms at the broker may select an abstract or generate a precis of an oversized document which exceeds a PDA's buffer limitations.

In addition to processing message content to conform to the above subscriber system capabilities, the broker will typically also perform any required text format conversions (such as ASCII to EBCDIC) and filtering of information in accordance with user-selection of required topics. These operations are known in the art.

The invention has the advantage of enabling a publish/subscribe information distribution mechanism to be extended to handle any type of message content including multimedia content whilst enabling implementation of this extended publish/subscribe capability within a heterogeneous network in which individual subscriber systems may have very different capabilities. The invention provides a broker which can take account of the subscriber system capabilities and adapt the message content which it sends to the subscriber systems to conform to the presentation capabilities or other capabilities of the individual subscriber systems. This may involve modifying both text and non-alphanumeric message content for preferred presentation mechanisms and formats.

There are significant advantages of processing message content at the broker to conform to subscriber system capabilities instead of leaving subscriber systems to perform the processing. In a pervasive computing environment where subscriber systems include systems with very limited memory and processing power, it may be impossible to perform the necessary modifications of message content at the subscriber system. Secondly, the subscriber systems' experience of communication link performance can be improved by avoiding transmission of excessive sized messages which include more content than is useful to the subscriber.

A preferred implementation of the collecting of subscriber system capabilities at the broker involves a message service agent at each subscriber system initiating a query of the system capabilities in response to a user initiating a request for an application program on the subscriber system to be registered as a subscriber. This query is preferably only run when the first subscription registration request is initiated at each subscriber system. The system capability information is then packaged and sent to the broker together with user-specified requirements for information subjects. The broker then stores the capabilities information in association with the subscriber subject requirements. In response to published messages being received at the broker, the broker identifies the message content and uses the stored subject requirements to determine which subscribers have registered to receive this message content and uses the stored capabilities information to determine what processing is required to match the message content to subscriber system capabilities.

The processing to conform to a subscriber system's capabilities may be performed subsequent to performing the steps of determining who the interested subscribers are and comparing the content characteristics of a received message with the interested subscriber's system capabilities. Alternatively, a plurality of derived messages may be generated for received messages having certain message content characteristics and then a check performed of which of the derived messages should be sent to each interested subscriber system.

The identification of message content preferably includes an analysis to identify specific non-alphanumeric data types within the message content, and this information is then used together with the subscriber capabilities information to determine the required processing by the broker. The user-specified requirements may also include an identification of particular processing operations which should be performed by the broker or by selectable processing modules associated with the broker. The analysis of message content and user-specification of requirements which identify required processing are described in the co-pending UK patent application number GB9906231.7 which is assigned to International Business Machines Corporation. These features will be described in more detail later.

In a second aspect of the invention there is provided a method, implemented at a message broker which is adapted to provide brokering services within a network, for modifying the content of messages received from publisher application programs prior to sending messages to subscriber application programs, the method including: analysing the content of received messages to identify content characteristics; comparing identified content characteristics with stored information regarding subscriber requirements to identify interested subscribers; comparing identified content characteristics with stored information regarding subscriber system capabilities to determine processing requirements for modifying the message content to conform to the subscriber system capabilities; and sending to the subscriber systems derived messages including message content which conforms to the subscriber system capabilities. The processing to generate derived messages may be performed either before checking individual system capabilities (i.e. generating a set of versions of modified message content and only subsequently determining which of these messages should be sent to a subscriber) or afterwards (i.e. using the capability information to generate a derived message which conforms).

In a third aspect, there is provided a message service agent software component for a subscriber system of a data communications network which includes publisher application programs located on a first plurality of computers sending messages to a broker on a server computer which then forwards messages to the subscriber systems, the message service agent being adapted to: respond to initiation at the subscriber system of a subscription registration request, to query subscriber system capabilities; and to send to the broker system capability information obtained by the query together with the subscription registration request.

In a fourth aspect of the present invention, there is provided a message broker supporting a publish/subscribe service wherein the broker is adapted to identify characteristics of the content of messages received from publisher application programs and to use the identification of message content characteristics to determine which of a set of message handler modules to pass the message to. The selected message handler module processes the message and then one or more derived messages are sent to subscribers for which this message type or message content has been requested.

The function of identifying message content characteristics and logic for determining which of a set of message handler modules to pass the message to, and preferably also the processing functions of one or more message handler modules, may be implemented within a replaceable software component which interoperates with and controls the operation of a message broker. This separation of certain functions into a replaceable component (such as a Java Bean or ActiveX component) enables the behaviour of a message broker to be modified according to the particular software component which is used with the broker.

The message broker may comprise a distributed broker infrastructure, preferably with interoperating message broker software elements installed on each of a plurality of data processing systems. Messages are passed to different processing systems according to each system's capabilities and the identified message characteristics. For example, one processing system may be connected to a database to provide efficient SQL database access whereas a second system may have particular capabilities for image processing such as the ability to perform fast floating point operations. Thus, intelligent selection of message brokers of a distributed broker service can be achieved using the present invention's identification of message content characteristics.

In a fifth aspect, the invention provides a message broker supporting a publish/subscribe service wherein the broker is adapted to identify non-alphanumeric message content (i.e. content which is not text-based or numerical or a digital or other encoded representation of text or numbers) within messages received from publisher application programs and to use the identification of non-alphanumeric message content to determine which of a number of message handler modules to pass the message to. The selected message handler module processes the message and then a derived message is sent by the broker to subscribers for which this message type or message content has been requested.

One or more of the selectable message handler modules are preferably multimedia processing modules, adapted to perform one or more specific processing operations on multimedia content within the message and then to pass one or more resulting modified or derived messages back to the broker. Recognition that a message contains non-alphanumeric content causes the broker to pass an incoming message to a processing module which is adapted to handle such content, such as a multimedia processing module. The processing module manipulates the content of the message and passes one or more derived messages back to the message broker, and it is the broker which then sends the derived message to the relevant subscriber application programs.

Thus, publish/subscribe capability has been extended by the present invention to support any type of message, including messages which include non-alphanumeric content such as multimedia content and to subscriber requirements which include a requirement for a message broker or associated message handler module to process the non-alphanumeric content. Prior to the present invention, identification and retrieval of any non-alphanumeric message content would have required a specific query to be constructed for each message scanned and so intelligent delivery of multimedia in a form required by subscribers could not be handled using known publish/subscribe mechanisms.

According to one embodiment of the invention, the message broker performs a determination of what particular operations are to be performed by the selected multimedia processing module according to specified requirements of subscribers and according to characteristics of the received message. Alternatively, a selected processing module may perform a standard set of operations regardless of subscriber requirements, with the broker only subsequently checking which subscribers require which type of output.

The non-alphanumeric content may be, for example, audio or image data or any binary data including executable program code. One example is where a broker is connected to receive messages containing waveform data representing the material broadcast by a radio station. The broker recognises that the message includes audio content and passes the message to a particular message handler module which performs the following functions: retrieves a watermark from the audio data, compares the watermark with a database of copyright owners and their material to identify the relevant owner and material, and generates a message to be published to the copyright owner informing them that a particular copyright work has been broadcast by a particular radio station at a particular date and time. This will allow the copyright owner to seek royalty payments. A second example is where an incoming message includes raw image data captured by a satellite. The incoming message is processed to create sets of different resolution images, such that the appropriate resolution images are then available for delivery in response to different subscriber requests. Satellite images can also be processed in order that the published messages contain derived information such as crop classification maps.

Note that the above examples involve the processing modules significantly modifying or interpreting the received message content - the messages subsequently delivered to subscribers may include extracted, processed or derived data which is pertinent to the particular subscriber's requirements. There may also be examples where it is appropriate for messages sent to subscribers (referred to herein as "derived" messages) to include identical content to the messages published by publishers, as determined by the message content characteristics and/or subscriber requirements. The invention's identification of multimedia content and consequent selection of an appropriate handler module is equally applicable to these latter cases.

The message broker according to the preferred embodiment of the invention is not limited to a single, specific message structure or to scanning of the contents of a particular field within a structured message, but is adapted to scan the content of a received message and to identify non-alphanumeric elements within the message. For example, the broker may be adapted to look for a topic string with certain topics having an expectation of non-alphanumeric content, and then to look for recognisable byte sequences which are representative of the structure of particular image formats (for example GIF, TIFF and JPEG files have a recognisable initial byte sequence).

### Brief Description of Drawings

Preferred embodiments of the invention will now be described in more detail, by way of example, with reference to the accompanying drawings in which:
Figure 1 is a schematic representation of a computer network implementing a first embodiment of the invention, including publisher application programs sending messages to a broker and subscriber application programs receiving messages from the broker;
Figure 2 is a schematic representation of a distributed broker architecture; and

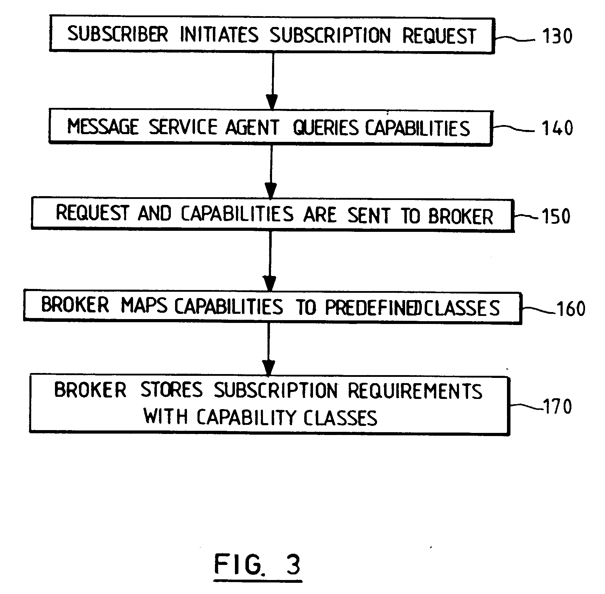

Figure 3 shows the sequence of operations of subscription according to an embodiment of the invention;

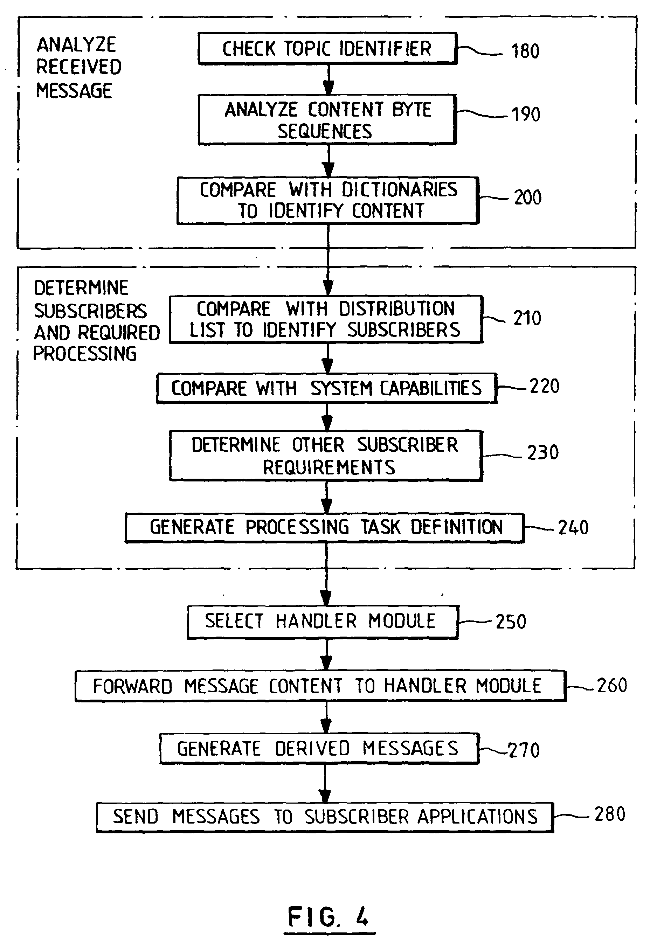

Figure 4 shows the sequence of operations of a publish/subscribe distribution method implemented by a broker according to an embodiment of the invention.
Figure 5 shows a linked list structure exemplifying a tabulated subscriber information storage structure within the broker of Figure 4.

### Detailed Description of Preferred Embodiments

The invention may be implemented in a heterogeneous data processing and communications network. Application programs running on different computers within the network are enabled to communicate and hence interoperate using messaging products such as IBM Corporation's MQSeries message queuing software products. Message queuing and commercially available message queuing products are described in "*Messaging and Queuing Using the MQI*", B.Blakeley, H.Harris & R.Lewis, McGraw-Hill, 1994, and in the following publications which are available from IBM Corporation: "*An Introduction to Messaging and Queuing*" (IBM Document number GC33-0805-00) and "*MQSeries - Message Queue Interface Technical Reference*" (IBM Document number SC33-0850-01). The network via which the computers communicate using message queuing may be the Internet, an intranet, or any computer network. IBM and MQSeries are trademarks of IBM Corporation.

IBM's MQSeries messaging software products provide transactional messaging support, synchronising messages within logical units of work in accordance with a messaging protocol which gives assured once and once-only message delivery even in the event of system or communications failures. MQSeries products provide assured delivery by not finally deleting a message from storage on a sender system until it is confirmed as safely stored by a receiver system, and by use of sophisticated recovery facilities. Prior to commitment of transfer of the message upon confirmation of successful storage, both the deletion of the message from storage at the sender system and insertion into storage at the receiver system are kept 'in doubt' and can be backed out atomically in the event of a failure. This message transmission protocol and the associated transactional concepts and recovery facilities are described in international patent application WO 95/10805 and US patent 5465328, which are incorporated herein by reference.

The message queuing inter-program communication support provided by the MQSeries products enables each application program to send messages to the input queue of any other target application program and each target application can asynchronously take these messages from its input queue for processing. This provides for assured delivery of messages between application programs which may be spread across a distributed heterogeneous computer network, but there can be great complexity in the map of possible interconnections between the application programs.

This complexity can be greatly simplified by including within the network architecture a communications hub to which all other systems connect, instead of having direct connections between all systems. Message brokering capabilities can then be provided at the communications hub to provide intelligent message routing and integration of applications. Message brokering functions typically include the ability to route messages intelligently according to business rules and knowledge of different application programs' information requirements, using message 'topic' information contained in message headers, and the ability to transform message formats using knowledge of the message format requirements of target applications or systems. Such brokering capabilities are provided by IBM Corporation's MQSeries Integrator software product, providing services for messages which are exchanged between application programs using IBM's MQSeries messaging products.

If we adopt an hierarchical view of these various components with application programs at the top closest to the user, then a message broker component sits at the next layer down between the application programs and the message delivery software.

According to the present invention, a message broker software product or software component can be adapted to support the publish/subscribe mechanism for information delivery and to extend that mechanism to include more complex processing of message content.

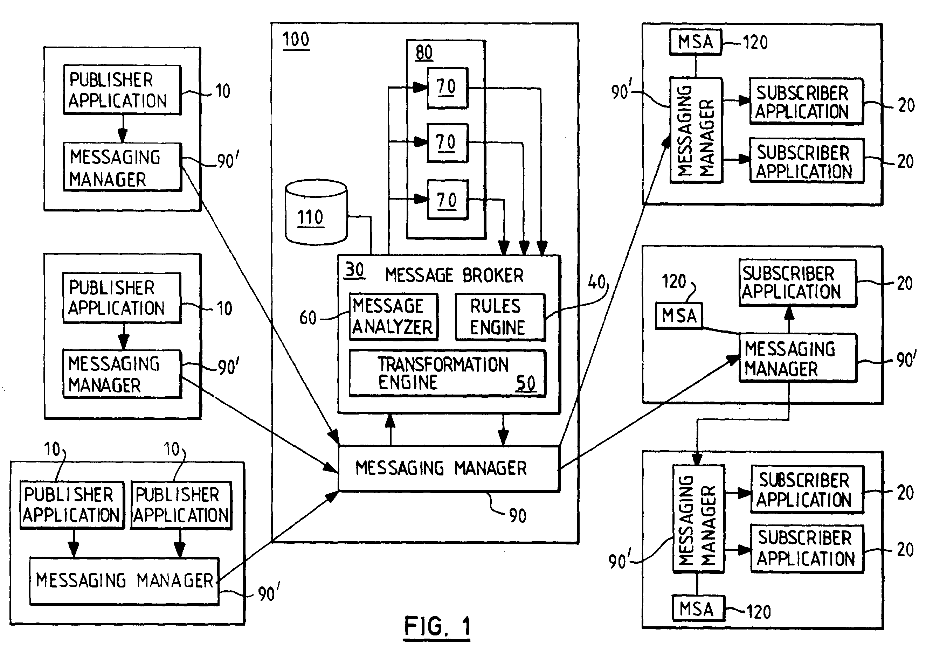

Figure 1 shows an overview of message flows between publishing application programs 10 and subscribing application programs 20 via a message broker 30 according to the present invention. The message broker 30 according to the preferred embodiment of the invention is implemented as a software component which interoperates with a message delivery software product 90 running on a computer system 100 to which all publishing applications connect via a communications network. However, the brokering functions could be distributed across a plurality of message broker components connected via the network, as discussed in the next paragraph. Thus, the message broker (whether a single component or distributed) is connected to receive all published messages. Each application program is associated with a message delivery product 90' which handles the complexities of inter-program communication across the network, and each message broker is also associated with a message delivery product 90 on its computer system 100.

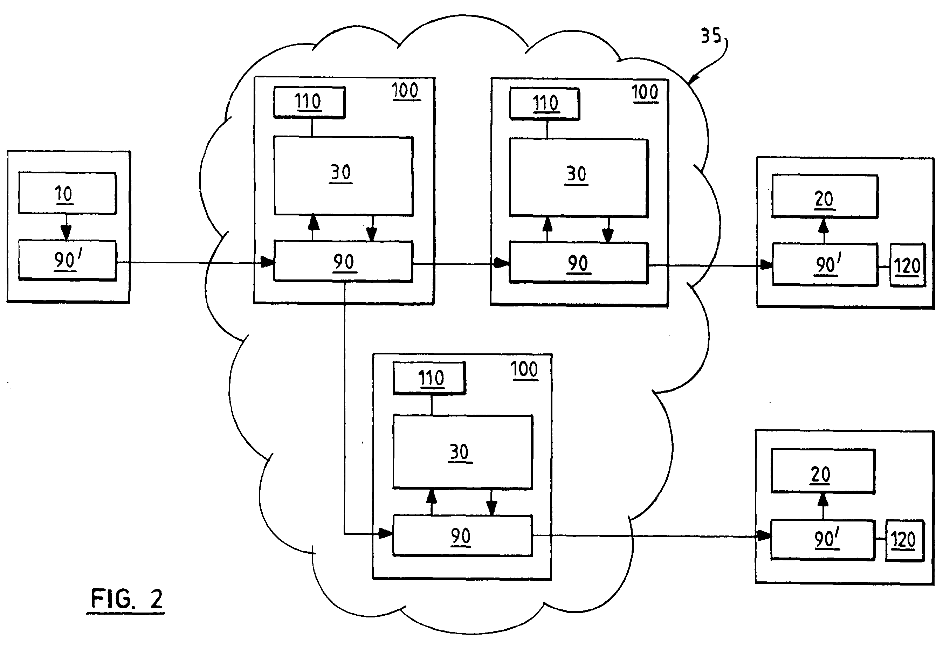

As noted above, and represented in Figure 2, instead of a single broker at the communications hub, the hub may consist of a distributed collection 35 of brokers 30 which communicate with each other. These brokers 30 may share subscription lists and provide a redundant, scalable distributed broker infrastructure. The message broker services provided by such a distributed broker infrastructure can be enhanced by using an identification of message content characteristics to select one of a plurality of processors within a distributed broker environment with reference to its functional capabilities and the identified message characteristics such that processing of the message is optimised. For example, if one part of the message broker function is located on a system having a direct connection to a database, the efficiency of SQL queries may be optimised by passing all SQL queries which are issued within a region of the network to that system. If a second part of the message broker function is located on a system which has specialised processing capabilities for images, then all messages within the relevant network region containing images may be sent to that system.

For ease of understanding, the following description will refer to a single message broker located on a single data processing system to which all published messages are sent.

A user of a subscriber application initiates 130 a request to register the subscriber application with the broker, the request including information entered by the user regarding the subjects for which the user wishes to receive messages. For example, the user can specify "STOCK/COMPUTERS/*" for stock prices of all computer companies, or "*/IBM" for all messages which relate to IBM Corporation, or can specify a requirement to receive all messages from a particular subscriber. The request to register is generated at the subscriber system and this triggers a message service agent 120 (a software component) at the subscriber system to query 140 a predefined set of the subscriber system's capabilities via a system level API. This can be a single API call which prompts retrieval of a comprehensive predefined set of system capability information. In this case, the query is only run when a first subscription registration request is initiated by a given subscriber system, unless the capability information being obtained by the query includes information which changes over time (such as the amount of memory space currently available for use by the subscriber application).

Alternatively, the message service agent may be adapted to issue a number of specific API calls, one for each required element of capability information, in dependence on the type of subscriber request. If the capability information queried is specific to the particular subscription request, then the information may need to be supplemented and/or updated for subsequent subscription requests. With this embodiment, no query may be run at all for certain types of subscription request.

The retrieved capabilities information and the existing generated request are then packaged by the message service agent 120 as an XML (Extensible Markup Language) structured message and sent 150 to the broker.

On receipt of a subscriber registration request, the broker maps 160 the system capability information included in the request to predefined classes of capability. For example, the maximum image resolution capability of a subscriber system may be 256x128 pixels. The broker then maps this to one of the classes High, Medium or Low resolution. A similar mapping to a predefined set of classes is performed for pixel depth, buffer sizes, and other parameters which can be categorized in this way. This ensures that the different types of processing which have to be performed for each different subscriber are limited to avoid the need to control unique processing operations in relation to each capability parameter for each different subscriber - providing a balance between performance and flexibility.

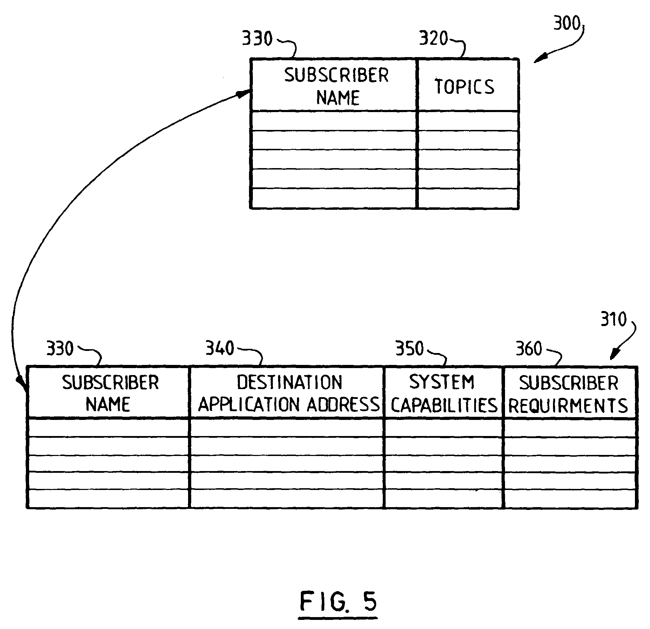

The broker then stores 170 the subject requirements of subscribers in tables of a database in a repository 110 in association with their categorised system capability information. Figure 5 shows an example table structure in which a first table 300 stores required subject information 320 in association with subscriber names 330 (user names). A second table 310 stores the subscriber names 330 together with the network address 340 of the subscriber application programs, the subscriber system capability information 350 and information 360 regarding any processing requirements specified by the user or required by the application program.

When a message is received by the message broker, a message analysis component 60 within the broker firstly investigates 180 the message header for a topic or subject identifier and/or identification of the sender, as is known in the art. A message publisher application may have identified a message topic or subject, such as by entering "STOCK/COMPUTERS/IBM" or "STOCK/AUTOS/GM" into a relevant field of the message header to indicate that the subject of the message is stock prices for IBM Corporation or General Motors respectively. The message broker includes a rules engine 40 which compares 210 any topic identifier and sender identifier retrieved from the message header of a published message with a list of subscribers' information requirements to identify which subscribers wish to receive this message.

Additionally, according to a preferred embodiment of the invention, the topic identifier is also compared 210 with a list of topic identifiers which are known to imply that there is non-alphanumeric message content. In one example implementation, message publisher applications provide information to the broker (as part of a registration process) including a list of topic identifier codes which are to be used when the publisher is publishing messages including non-alphanumeric content. (Alternatively, the registration process could involve publishers specifying message topics which will only include text-based content, to indicate that no further analysis of the content of such messages is required to determine whether there is any non-textual content.)

Then, unless the attempt to retrieve and interpret a message topic identifier enables a final determination of how to handle the message, the message broker's analysis component 60 scans 190 the content of the message, looking for byte sequences which are representative of particular content types. The analysis component 60 compares 200 byte sequences from the message content with dictionaries of byte sequences which are representative of certain content-type-specific structures. For example, GIF, TIFF and JPEG images each have characteristic byte structures. The content scanning step can identify audio content and images and resolve image formats. A message could also include program code, such as HTML (Hypertext Markup Language) or XML codes which describe the format of data for display by an Internet Web browser. The message content scanning step could easily be implemented to recognise XML or HTML by reference to their respective dictionary of tags.

Next, having identified published message content 200 and identified interested subscribers 210, the system capabilities information and other subscriber-specific and application-specific information is retrieved from the subscriber information tables. The rules engine 40 then compares 220,230 the identified message content with the stored subscriber application requirements and system capabilities of the identified interested subscribers and any stored information regarding particular processing which the user has requested. For example, an incoming message may contain an image file having a particular resolution such as 1280 x 1024, which the rules engine determines exceeds the 'Medium' resolution capability of a particular subscriber system. The rules engine thus identifies a requirement to convert the image to 'Medium' resolution (640x512). Similar requirements for processing are identified for other capability parameters.

The broker now has sufficient information to generate 240 a processing task definition regarding the processing which must be performed to generate a derived message content which is to be sent to the subscriber application and which content will conform to the following requirements:
- matching the subject matter requirements of the user;
- matching the system capabilities of the subscriber system; and
- matching the format requirements of the subscriber application.

The processing task definition is then used to select 250,260 and control the operation of a particular processing module 70, or a plurality of processing modules, of the broker to perform 270 the required processing. A collection of message handler modules 70, including the multimedia processing modules, are held as objects in an object library 80 and are instantiable in response to the broker's determination of a requirement for a specific processing module 70 to perform its processing operations on a received message. The message broker 30 responds to a selection 250 of a message handler module 70 by checking whether that module is already running (i.e. has been instantiated on receipt of a previous message) and, if so, queuing the message in an input buffer for processing by that handler module. If the required handler module is not running, then it is instantiated and the message is passed to the input buffer of the handler module for processing.

In one embodiment of the invention, all messages which include image content and for which some processing of that content is required are passed 260 to a single image processor module. Similarly, all messages including audio data which requires processing are passed to a single audio processing module and messages including other identifiable data types are passed to a respective processing module for that type. This may entail passing a single message through a sequence of processing steps each performed by a different message handler module if the message includes a number of content types. Messages containing executable code may be passed to a processing module that performs authentication (for example, digital signature verification or virus checking) prior to permitting publication, to protect subscribers from undesirable program code.

The processing which is performed by the selected message handler module is determined by the specified requirements of individual subscriber applications, the particular characteristics of the received message content, and the capabilities of the subscriber system. Using the example of XML message content given earlier, examination of the XML content could indicate the existence of specific multimedia content and reveal the characteristics of the content that would be relevant to a determination of how it should be processed, and in some circumstances XML format could then also be used to provide one or more code modules that would be required for appropriately processing the identified content.

The selected message handler module then performs 270 operations on the message content in accordance with the associated task definition, and passes the resulting derived message or messages back to the message broker for distribution 280 to the relevant subscribers.

There is a potential performance problem with the above described implementation of the invention in that, even with the above-described classification of capability parameters into predefined classes (such as High, Medium and Low), there is still potentially a different set of processing operations being performed on each published message for each subscribing user and this has performance overheads. An alternative embodiment of the invention generates multiple versions of the content of some messages (for example, where the message includes an image file having a resolution above a minimum threshold, generating High, Medium and Low resolution images) and only subsequently refers to individual system capabilities and application and user-requirements to determine which version of the image or other content should be sent to which subscribers. This can have significant performance benefits, especially if the generation of the multiple versions of message content is performed in parallel with retrieval of the system capability and other relevant information.

Furthermore, performance can be optimised for the particular network environment by selecting which message content characteristics should be modified by processing prior to a comparison with subscriber capabilities and requirements and which characteristics should only be modified with reference to individual subscriber capabilities and requirements. An example of this is to set a flag when there is at least one active subscriber application which requires transcoding of text to audio, and if the flag is set to perform such transcoding to generate an audio file prior to comparing an individual message's content with individual subscriber requirements. This can avoid having to replicate the transcoding step as part of the personalised processing for particular subscribers. More generally, flags can be set at the broker to indicate whether there are active subscriber systems having particular system capabilities and to generate different versions of message content in accordance with the subscriber system capabilities of the active subscribers prior to checking message content against the system capabilities of specific interested subscribers.

The above examples of alternative embodiments of the invention show that there is considerable flexibility in relation to the sequence of events. There is similar flexibility in relation to the architecture of the broker, since particular operations such as transcoding could be performed by a separate transcoding service or at various points within the message flow.

The advantages of the present invention will now be described with reference to a number of examples of message processing and brokering according to the invention.

A first example is where there are limited storage capabilities at a subscriber system, whereas the broker is located on a server system running a database. It may be appropriate to send to a subscriber application program a pointer which will enable a user of the subscriber application to access the database via the broker when required without having to replicate records of the database onto the subscriber system unnecessarily. The message sent to the subscriber by the broker in response to a published message arriving from a publisher may include a SQL expression for subsequently querying the database on the broker's server, or it may include a URL for accessing a Web page via the Internet or an intranet. It should be note that a broker for an Internet Web server may have a great range of different client systems sending requests to it, and so the present invention's ability to take account of subscriber system capabilities is very relevant to the Internet environment.

A second example use of the invention is for reducing the size of text documents to conform to the available text buffer size of the subscriber system. SGML and XML are example languages for describing information content which allow an intelligent mark-up of sections of a document (abstract, title, figures, authors, etc) so that it is possible to request that only abstracts, for example, of documents be delivered to your subscriber application if you know the vocabulary of the tagged documents. If only 10kb is available for storing a text document, the subscription may require processing of larger documents to reduce them to 10kb or less. As an alternative to selection of the abstract, the broker may call algorithms which perform more complex text processing such as generating a precis.

For a third example, consider a computer system which is set up to publish messages including images of the surface of the earth captured by an orbiting satellite. The organisation obtaining the information is able to recoup some of the costs of retrieving and processing their data by offering a subscription service to other organisations interested in receiving particular data contained within the captured images. A publisher application program at this first system periodically generates messages containing the raw captured images and sends these messages to the message broker. The message broker analyses 180-200 the messages on receipt and identifies the presence of images within the messages (by the combination of comparing any recognised message topic identifier with known topics and scanning message content, as described above).

The message broker uses the topic identifier to check 210 records of subscriber requirements - determining which subscribers have registered a requirement to receive messages related to this topic and determining what specific data requirements have been specified by those subscribers. As an example, a first subscriber may have registered with the message broker with a requirement for the subscriber to be set a message whenever the message broker receives messages including a topic identifier naming the specific publisher organisation. The subscriber may also have specified that all received messages from that publisher organisation should have their image content processed to generate a derived image showing classifications of crops identifiable from the captured raw image. Furthermore, the subscriber system's capabilities may impose requirements for particular image processing operations. One example is the pixel depth of the subscriber system display, which may be bilevel, 256 level greyscale, or 24 bit colour - mapped by the broker to one of a set of pixel depth classes (High, Medium or Low). Having recognised the presence of image content, the message broker accesses the system capabilities information and user-specified requirements and then generates a task definition which describes the operations to be performed to process the received message's image content in the required way.

The received message and the processing task definition are then sent 260 to a suitable image processing message handler module. This message handler module performs 270 the defined sequence of processing operations and then passes back to the message broker a derived message which includes the modified image data.

The message broker then forwards 280 the derived message to the subscriber or subscribers who specified this information requirement. This routing of the final derived message or messages to subscribers in accordance with subscriber's information requirements (under the control of the rules engine 40) is very similar to the routing performed by prior art message brokers. Thus, the present invention enables content-type-specific processing of message content in accordance with subscriber system capabilities such that the content of messages sent to subscribers matches their system capabilities as well as the user-specified and application-specific requirements. The publish/subscribe broker according to the invention also provides the ability to perform appropriate processing of a message without relying on the inclusion of a single specific message structure. These advantages are provided within the context of an otherwise conventional publish/subscribe system which uses business logic for identification of relevant subscribers.

In the preferred embodiment of the invention, the message content type and system capabilities can be used to select a message handler module without reliance on a topic identifier in the message header. The analysis component 60 of the message broker scans message content (and this can be done either in all cases or only if querying of the message header is not sufficient to determine which message handler module to select). In one specific example implementation, when an image is identified within the message content by this scanning step, the image can undergo a watermark extraction process followed by an analysis of the watermark to determine whether this includes information sufficient to identify what message handler module should be selected. This watermark together with the subscriber system capabilities and stored subscriber requirements determine what specific processing operations should be performed on the image.

Similar watermark extraction and analysis to determine required processing operations can also be implemented for audio data within a message. One example is where a broker is connected to receive messages containing waveform data representing the material broadcast by a radio station. The broker recognises that the message includes audio content and passes the message to a particular message handler module which performs the following functions: retrieves a watermark from the audio data, compares the watermark with a database of copyright owners and their material to identify the relevant owner and material, and generates a message to be published to the copyright owner informing them that a particular copyright work has been broadcast by a particular radio station at a particular date and time. This will allow the copyright owner to seek royalty payments. The subscribing user may have specified, or the subscriber application may require, an output type such as an e-mail memo and so specific processing may be required to significantly transform the message into the required type.

The message broker according to the preferred embodiment of the invention is able to employ logic which relies on an analysis of text-based information in a message header and text-based data within the content of a message to determine whether a particular subscriber should receive a message in response to receipt by the broker of an incoming message. That is, in addition to the multimedia processing capability of apparatus implementing the invention, the processing performed by a broker according to the invention may include processing subscriber information requirements such as a requirement to be notified of the stock price of a company (COMPANYNAME) when the stock price exceeds a threshold price. The subscriber may specify "STOCK/COMPUTERS/COMPANYNAME" as a topic identifier to be identified from message headers and "PRICE: >$150" as a filter which requires scanning of a share price field within the content of a received message to determine whether a message should be sent to that subscriber. The content analysis can also be implemented by queries which use the Structured Query Language notation or similar to test whether certain conditions are true (for example, "the value of COMPANYNAME stock is > $150").

In a further example of operation of a message broker implementing the invention, content queries may involve multimedia content analysis following on from the multimedia identification described above. This goes far beyond the simple business logic which is known in prior art systems. For example, subscribers may register an interest in receiving any images which include a red circle towards the top right of the image as a way of investigating possible trade mark infringement, or register an interest in receiving any image which is sufficiently similar to an example image or set of images which are representative of certain classes of image.

Technology is available (for example, IBM's Query By Image Content (QBIC) technology described in US patent 5579471) which allows image matching in response to such example images or user descriptions of features of an image that they want to match. The incoming image would be run as a query against a QBIC catalogue comprising the class representatives, the results being a set of distance measures. Fuzzy matching algorithms establish how close an image within a message is to the examples images or requested features. The subscription registration mechanism in a traditional publish/subscribe broker can thus be enhanced using multimedia feature definitions and multimedia feature comparisons to allow only those messages that meet the subscription criteria (within a given tolerance defined by specific thresholds) to be delivered to the subscribing user.

The QBIC example shows that the identification of message content characteristics can comprise separate steps of recognising the existence of a certain message content type (typically using precise matching of a given byte sequence) and then identifying image content characteristics beyond those which are inherent in the recognised byte sequence (such as whether the content matches defined parameters or example images within certain tolerances).

Following these steps, a decision is made with reference to subscriber system capabilities as to what processing to perform and how to do it. There is considerable flexibility within the scope of the invention regarding how to implement this step. The decision can employ a stored and relatively inflexible method or a dynamic approach that relies on periodic input from both publisher and subscriber. The subscriber may specify when registering as a subscriber some particular processing operations that it requires to be performed on messages to generate derived messages. Examples of this were described earlier.

The function of identifying message content characteristics and the logic for determining which of a set of message handler modules to pass the message to and for generating a task definition for controlling the operation of the message handler modules (and preferably also the actual processing functions of one or more message handler modules) may be implemented within a replaceable software component which interoperates with and controls the operation of a message broker. This separation of certain functions into a replaceable component (such as a Java Bean or ActiveX component) enables the behaviour of a message broker to be modified according to the particular software component which is used with the broker. It also enables new capabilities to be added over time, such as by loading new message feature dictionaries into an object library when they become available and thereby enabling the message broker to recognise new message content types.

It will be clear to a person having ordinary skill in the art that a number of modifications to the above described embodiments of the invention can be made within the scope of the invention. For example, the querying of a subscriber system's capabilities may be triggered by a request sent from the broker after the broker receives a request for subscriber registration instead of before, although it is preferred not to overload the broker with unnecessary processing. The querying of system capabilities may be implemented by a process implemented within the messaging manager as an alternative to a specialised separate message service agent. Furthermore, the above description refers to a number of different examples of capability information. Particular implementations of the invention may use only a single capability characteristic, and other implementations may take account of any number of different capabilities.

In one embodiment, the broker is provided with stored information of system capabilities for a number of types of subscriber system, and a subscriber system merely includes with a subscription request an identifier of its system type. This is sufficient for the broker to identify which of the stored capabilities information applies to particular subscriber systems.

## Claims

1. A message broker for providing brokering services for a publish/subscribe distribution service within a communications network, wherein the broker is adapted to receive and save information from subscriber systems within the network regarding their system capabilities, and wherein the broker is responsive to receipt of messages from publisher application programs within the network to modify the content of the messages to conform to the subscriber system capabilities and then to send derived messages including the modified message content to subscriber application programs at the subscriber systems.

2. A message broker according to claim 1, wherein the message broker includes components for performing the following operations:
analyzing messages received from publisher application programs to identify characteristics of the message content;
accessing information regarding subscriber requirements and subscriber system capabilities;
comparing message content characteristics with the subscriber requirements information to identify interested subscribers;
comparing message content characteristics with the capabilities information for subscriber systems of interested subscribers to determine whether they conform;
responsive to determining that the message content characteristics do not conform to a subscriber system's capabilities, modifying the message content to conform to the subscriber system capabilities and sending to a subscriber application program at the subscriber system a derived message including the modified message content.

3. A message broker according to claim 1, wherein the message broker includes components for performing the following operations in response to receipt of a message from a publisher application program:
analyzing the message to identify characteristics of the message content;
generating a plurality of derived messages having modified message content;
accessing information regarding subscriber requirements and subscriber system capabilities;
comparing message content characteristics with the subscriber requirements information to identify interested subscribers;
comparing message content characteristics with the capabilities information for subscriber systems of interested subscribers to determine which of the plurality of derived messages should be sent to each interested subscriber; and
sending to interested subscribers a selected one of the derived messages which conforms to the capabilities of the respective subscriber system.

4. A message broker according to any one of the preceding claims wherein the subscriber system capabilities information stored by the broker includes image and/or video presentation capabilities.

5. A message broker according to any one of the preceding claims wherein the subscriber system capabilities information stored by the broker includes audio playback capabilities.

6. A message broker according to any one of the preceding claims, including means for analyzing byte sequences of the content of messages received from publisher application programs to identify structures representative of particular types of multimedia message content.

7. A distributed message broker infrastructure comprising a plurality of message broker components according to claim 1, each for running on one of a plurality of interconnected computer systems, each message broker software component having access to information regarding the capabilities of each of said plurality of interconnected computer systems and each message broker component being adapted to select, in accordance with identification of message content characteristics of received messages and in accordance with the capabilities of the plurality of interconnected computer systems, one of said computer systems for processing a message.

8. A method, implemented by a message broker which is adapted to provide brokering services within a network, for modifying the content of messages received from publisher application programs prior to sending messages to subscriber application programs, the method including:
analysing the content of received messages to identify content characteristics;
comparing identified content characteristics with stored information regarding subscriber requirements to identify interested subscribers;
comparing identified content characteristics with stored information regarding subscriber system capabilities to determine processing requirements for modifying the message content to conform to the subscriber system capabilities;
generating one or more derived messages including modified message content; and
sending to the subscriber systems derived messages including message content which conforms to the subscriber system capabilities.

9. A method according to claim 8, including generating a plurality of derived versions of the received message content prior to the step of comparing identified content characteristics with subscriber requirements, wherein the determination of processing requirements is used for selection of one of the plurality of derived content versions for sending to a subscriber system.

10. A method according to claim 8, wherein the step of generating one or more derived messages is performed subsequent to and in accordance with the determination of processing requirements such that the broker generates derived messages which conform to the subscriber system capabilities.

11. A computer program for controlling the operation of a computing device on which it is run, to execute processes to perform the following operations:
in response to initiation, by a user of the device, of a request for an application program on the device to subscribe to a publish/subscribe distribution service such that the subscriber application program will receive messages from a message broker which provides brokering services for the publish/subscribe distribution service, querying the system capabilities of the computing device; and
sending the capabilities information for the computing device to the message broker in association with the subscription request.

12. A data processing system for connection within a communications network, the system including a message broker according to claim 1 for providing brokering services for a publish/subscribe distribution service.

13. A distributed data processing apparatus comprising a first set of data processing systems having installed thereon application programs adapted for publishing messages, the first set of data processing systems being connected for sending published messages to a communications hub having message broker software installed thereon, the communications hub being connected to a second set of data processing systems having installed thereon application programs adapted to subscribe to the message broker software as subscriber application programs of a publish/subscribe distribution service, wherein the message broker software comprises a message broker according to claim 1.

14. A message broker for supporting a publish/subscribe service by receiving messages from publisher application programs and then forwarding messages to subscriber application programs in accordance with subscriber requirements, wherein the message broker component includes:
a message analysis component for identifying non-alphanumeric message content within messages received from publisher application programs;
a selector for using the identification of non-alphanumeric message content to determine which of a set of message handler components to pass the message to;
a set of selectable message handler components for processing received messages to generate one or more derived messages;
means for accessing a repository storing requirements of subscriber application programs; and
means, responsive to requirements of subscriber application programs stored in said repository, for passing derived messages to subscriber application programs which require the derived messages.

15. A message broker according to claim 14, which is adapted to access the repository of subscriber requirements to determine what processing operations are to be performed on received messages by the message handler components.

16. A message broker according to claim 14 or claim 15, wherein the selector is adapted to select one of the set of message handler modules in response to an identification by the message analysis component of the type of non-alphanumeric message content within a received message.

17. A message broker according to claim 16, wherein the means for identifying non-alphanumeric message content includes means for analysing byte sequences within the message content to identify structures representative of particular types of multimedia message content.

18. A message broker according to any one of claims 14 to 17, wherein the message analysis component is adapted to implement a watermark retrieval operation for received messages and to analyse retrieved watermarks to identify information contained therein which facilitates a determination of which of the set of message handler components to pass the message to.

19. A message broker according to any one of claims 14 to 17, wherein one or more of said message handler modules is adapted to implement a watermark retrieval operation for messages passed to that message handler module and to analyse retrieved watermarks to identify information contained therein which facilitates a determination of what processing operations are to be performed on the message by the message handler module.

20. A process controller component for a message broker according to claim 14, wherein the process controller component includes the message analysis component and the message handler component selector.

21. A message broker software component supporting a publish/subscribe service, for controlling the operation of a computer on which it runs to perform the following steps:
identifying non-alphanumeric content of messages received from publisher application programs;
using the identification of non-alphanumeric message content to determine which of a set of message handler modules to pass the message to;
processing the message using the selected message handler module to generate one or more derived messages; and
sending a derived message to subscribers which require the derived messages, as determined by stored subscriber requirements.

22. A distributed message broker infrastructure comprising a plurality of message broker software components according to claim 21, each for running on one of a plurality of interconnected computer systems, each message broker software component having access to information regarding the capabilities of each of the plurality of interconnected computer systems and each message broker software component being adapted to select, in accordance with the identification of non-alphanumeric content of received messages and in accordance with the capabilities of the plurality of interconnected computer systems, one of said computer systems for processing a message.

23. A method, implemented by a message broker within a communications network, of processing messages received by the message broker from publisher application programs and publishing messages to subscriber application programs in response to said received messages, the method including the steps of:
analysing received messages to identify non-alphanumeric message content;
selecting, using the identification of non-alphanumeric message content, one of a set of message handler components to pass each received message to;
passing each received message to the selected message handler module;
performing the steps of retrieving information requirements of subscriber application programs from a repository storing said information requirements and processing the received messages using the selected message handler modules; and
responsive to the retrieved information requirements of subscriber application programs, passing processed messages to subscriber application programs which have a requirement to receive the processed messages.

24. A computer system including a message broker component for supporting a publish/subscribe service on behalf of application programs connected thereto via a communications network, wherein the message broker component includes:
a message analysis component for identifying non-alphanumeric message content within messages received from publisher application programs;
a selector for using the identification of non-alphanumeric message content to determine which of a set of message handler modules to pass the message to;
a set of selectable message handler components for processing received messages to generate one or more derived messages;
a repository for storing requirements of subscriber application programs; and
means, responsive to requirements of subscriber application programs stored in said repository, for passing derived messages to subscriber application programs which require the derived messages.
